# NEW EUROPEAN PATENT SPECIFICATION

(11) **EP 0 590 894 B2**
(45) Date of publication and mention of the opposition decision: **06.05.2004**
(45) Mention of the grant of the patent: 25.03.1998
(21) Application number: 93307590.5
(22) Date of filing: 24.09.1993
(51) Int. Cl.: C10G 45/08, B01J 35/10

(54) **Hydroconversion process**
Hydroumwandlungsverfahren
Procédé d'hydroconversion

(30) Priority: 29.09.1992 US 953176
(43) Date of publication of application: 06.04.1994
(73) Proprietor: TEXACO DEVELOPMENT CORPORATION, White Plains, New York 10650 (US)
(72) Inventor: Dai, Pei-Shing, Pt. Arthur, TX 77640 (US); Nelson, Gerald Verdell, Nederland, TX 77627 (US); Nongbri, Govanon, Pt. Neches, TX 77641 (US); Pratt, Ray Earl, Pt. Neches, TX 77651 (US); Sherwood, David Edward, Jr., Beaumont, TX 77706 (US)
(74) Representative: Nash, David Allan

(56) References cited:
- EP-A- 0 235 411
- CA-A- 1 248 513
- US-A- 3 853 789
- US-A- 4 115 248
- US-A- 4 395 329
- US-A- 4 941 964
- US-A- 5 047 142
- Article "Catalytic Hydrotreating in Petroleum Refining"D.C.McCulloch, Appl.Ind.Catalysis, ed.: B.E.Leach, vol. 1, Acad.Press (1983),pgs.82-85(D3)
- "Powders: Preparation, Use and Charact. of Solids in the Powdered Form" lecture hand-out at Utrecht University (Dutch)(1986)
- ASTM standard for measuring PV distribution of catalysts by Hg porosimetry, no. D4284-88 (1988)(D7)
- ASTM standard for measuring PV distribution of catalysts by Hg porosimetry, no. D484-92 (1992) (D8)
- Article "Contact Angle of Hg against Catalysts Materials for Use in Intrusion Porosimetry "A.Balker & A.Relthaar in Ind.Eng.Chem.Prod.(21), 590-1 (1982)(D9)
- Article "Determination of Dry Sludge Content of Fuel Oils: Development of the Shell Hot Filtration Test" W.J. van Kerkvoort & A.J.J. Nieuwstad in J. Inst. Petrol. (37), pg 596-604 (1950)(D10)
- Web page - Technical support - Whatman filter Papers (D11)
- Article "Characterization of Porous Materials Using Mercury Porosimetry" J.Kloubek in Adv.Mech.Granul.Mater (1), (1983)(D12)

## Description

This invention relates to a process for hydrotreating a hydrocarbon feed. More particularly it relates to a hydroconversion process employing catalyst with a specified pore size distribution.

As is well known to those skilled in the art, it is desired to convert heavy hydrocarbons, such as those having a boiling point above about 540°C (1000°F), into lighter hydrocarbons which are characterized by higher economic value. It is also desirable to treat hydrocarbon feedstocks, particularly petroleum residues, to achieve other goals including hydro-desulfurization (HDS), hydrodenitrogenation (HDN), carbon residue reduction (CRR), and hydrodemetallation (HDM) - the latter particularly including removal of nickel compounds (HDNi) and vanadium compounds (HDV).

These processes typically employ hydrotreating catalysts with specified ranges of pores having relatively small diameters (i.e. micropores) and pores having relatively large diameters (i.e. macropores).

US-A-5,047,142 (Dai et al) discloses a catalyst composition useful in the hydroprocessing of a sulfur-and metal-containing feedstock comprising an oxide of nickel or cobalt and an oxide of molybdenum on a porous alumina support in such a manner that the molybdenum gradient of the catalyst has value of less than 6.0 and 15-30% of the nickel or cobalt is in an acid extractable form, and having a surface area of 150-210 m²/g, a Total Pore Volume (TPV) of 0.50-0.75 cc/g, and a pore size distribution such that less than 25% TPV is in pores having diameters of less than 100Å, 70.0-85.0% TPV is in pores having diameters of 100Å-160Å and 1.0-15.0% TPV is in pores having diameters of greater than 250Å.

US-A-4,941,964 (Dai et al) discloses a process for the hydrotreatment of a sulfur- and metal-containing feed which comprises contacting said feed with hydrogen and a catalyst in a manner such that the catalyst is maintained at isothermal conditions and is exposed to a uniform quality of feed, the catalyst comprising an oxide of a Group VIII metal, an oxide of a Group VI-B metal and 0-2.0 weight % of an oxide of phosphorus on a porous alumina support, and having a surface area of 150-210 m²/g and a Total Pore Volume (TPV) of 0.50-0.75 cc/g such that 70-85% TPV is in pores having diameters of 100Å-160Å and 5.5-22.0% TPV is in pores having diameters of greater than 250Å.

Early petroleum distillate hydrotreating catalysts generally were monomodal catalysts with very small micropore diameters (less than say 100Å) and rather broad pore size distributions. First generation petroleum resid hydro-treating catalysts were developed by introducing a large amount of macroporosity into a distillate hydrotreating catalyst pore structure to overcome the diffusion resistance of large molecules. Such catalysts, which are considered fully bimodal HDS/HDM catalysts, are typified by those described in US-A-4,395,328 and US-A-4,089,774.

Another approach to developing improved catalysts for petroleum resid processing has involved enlarging the micropore diameters of essentially monomodal catalysts (having no significant macroporosities) to overcome the above described diffusion limitations. Essentially monomodal catalysts with small micropore diameters and low macroporosities designed for improved petroleum resid HDS include those disclosed in U.S. 4,738,944: 4,652,545: 4,341,625; 4,309,378: 4,306,965; 4,297,242: 4,066,574; 4,051,021; 4,048,060 (1st stage catalyst): 3,770,617; and 3,692,698. Essentially monomodal catalysts with larger micropore diameters and low macroporosities designed for improved petroleum resid HDM include those disclosed in U.S. 4,328,127; 4,309,278; 4,082,695; 4,048,060 (2nd stage catalyst): and 3,876,523.

A recent approach to developing improved catalysts for petroleum resid processing has involved the use of catalysts having micropore diameters intermediate between the above described monomodal HDS and HDM catalysts, as well as sufficient macroporosities so as to overcome the diffusion limitations for petroleum bottoms HDS i. e., sulfur removal from hydrocarbon product of a hydrotreated petroleum resid having a boiling point greater than 540°C (1000°F) but limited macro-porosities to limit poisoning of the interiors of the catalyst particles. Catalysts, with micropore diameters intermediate between the above-described monomodal HDS and HDM catalysts with limited macroporosities include those of US-A-4,941,964 and US-A-5,047,142.

However, none of the above-identified catalyst types has been found to be effective for achieving desired levels of hydroconversion of feedstocks components having a boiling point greater than 540°C (1000°F) to products having a boiling point less than 540°C (1000°F) while simultaneously yielding a 540°C+ (1000°F+) product having a lower sulfur content.

It is a particular feature of the prior art, however, that it has not heretofore been possible to carry out hydrotreating of such feedstocks to attain desirable results as measured by conversion without undesirable formation of sediment. The charge to hydrotreating is typically characterized by a very low sediment content of 0.01 w% max.

Sediment is typically measured by testing a sample by the Shell Hot Filtration Solids Test (SHFST). See Jour, Inst. Pet (1951) 37 pages 596-604 Van Kerknoort et al - incorporated herein by reference. Typical prior art hydro-treating processes commonly yield Shell Hot Filtration Solids SHFS of above about 0.19w% and as high as about 1 w% in the 340°C+ (650°F+) product recovered from the bottoms flash drum (BFD). Production of large amounts of sediment is undesirable in that it results in deposition in downstream units which in due course must be removed. This of course requires that the unit be shut down for an undesirably long period of time.

It is an object of this invention to provide a process for hydrotreating a charge hydrocarbon feed. Other objects will be apparent to those skilled in the art.

In accordance with certain of its aspects, this invention is directed to a process for hydrotreating a charge hydrocarbon feed containing components boiling above 540°C (1000°F), and sediment-formers, sulfur, metals, asphaltenes, carbon residue, and nitrogen which comprises
contacting said charge hydrocarbon feed in an ebullated bed with hydrogen at isothermal hydrotreating conditions in the presence of, as catalyst, a porous alumina support bearing 2.2-6w% of a Group VIII non-noble metal oxide, 7-24w% of a Group VI-B metal oxide, and 0-2w% of a phosphorus oxide, said catalyst having a Total Surface Area of 150-240 m²/g, a Total Pore Volume of 0.7-0.98 cc/g, and a Pore Diameter Distribution whereby less than 15% of the Total Pore Volume is present as primary micropores of diameter less than 100Å, at least 50% of the Total Pore Volume is present as secondary micropores of diameter of 100Å-200Å, 26-35% of the Total Pore Volume is present as mesopores of diameter ≥200Å, and 14-22% of the Total Pore Volume is present as macropores of diameter ≥ 1000Å, thereby forming hydrotreated product containing decreased contents of components boiling above 540°C (1000°F), sediment, sulfur, metals, carbon residue, asphaltenes, and nitrogen; and thereafter recovering said hydrotreated product.

The charge hydrocarbon feed which may be charged to the process of this invention may include heavy, high boiling petroleum cuts typified by gas oil, vacuum gas oils, coal/oil mixtures, residual oils, vacuum resid, etc. The process of this invention is particularly useful to treat high boiling oils which contain components boiling above 540°C (1000°F) to convert them to products boiling below 540°C (1000°F). The charge may be a petroleum fraction having a boiling point of above 340°C (650°F) characterized by presence of an undesirably high content of components boiling above 540°C (1000°F), sediment-formers, metals, sulfur, carbon residue, and asphaltenes.

It is a particular feature of the process of this invention that it may permit treating of hydrocarbon charge, particularly those containing components boiling above about 540°C (1000°F), to form product which is characterized by an increased content of components boiling below 540°C (1000°F) and by decreased content of undesirable components typified by sediment, metals, sulfur, carbon residues, and asphaltenes. Asphaltenes are herein defined as the quantity of n-heptane-insolubles minus the quantity of toluene-insolubles in the feedstock or product.

An illustrative charge which may be utilized is an Arabian Medium/Heavy Vacuum Resid having the following properties set forth in the first column of the table - the second column setting forth the properties of another typical charge which includes a mixture of a fluid cracked heavy cycle gas oil (FC HCGO) and an Arabian Medium/Heavy Vacuum Resid:

**TABLE**

| Property | I | II |
|---|---|---|
| API Gravity | 4.4 | 3.1 |
| 540°C+, vol% | 87.3 | 76.1 |
| 540°C+, w% | 88.3 | -- |
| 540°C- w% | 11.7 | -- |
| Sulfur, w% | 5.8 | 5.6 |
| Total Nitrogen, wppm | 4815 | 4328 |
| Hydrogen, w% | 10.10 | 9.88 |
| Carbon, w% | 83.5 | 84.10 |
| Alcor MCR, w% | 22.4 | 20.2 |
| Kinematic Viscosity, cSt | | |
| @ 93°C (200°F) | 1706 | -- |
| @ 120°C (250°F) | 476 | -- |
| Pour Point, °C | 43 | -- |
| n-C₅ Insolubles, w% | 35.6 | 30.16 |
| n-*C*₇ Insolubles, w% | 10.97 | 9.49 |
| Toluene Insolubles, w% | 0.01 | 0.01 |
| Asphaltenes, w% | 10.96 | 9.48 |
| Metals, wppm | | |
| Ni | 44 | 37 |
| V | 141 | 118 |
| Fe | 11 | 9 |
| Sediment wppm | Nil | Nil |

In practice of the process of this invention according to certain of its aspects, the charge hydrocarbon feed is mixed with about 15v% of a fluid cracked heavy cycle gas oil (to form a mixture such as that of column 2 of the Table supra) and contacted with hydrogen at isothermal hydro-treating conditions in the presence of catalyst. Hydrogen is charged at a rate of 340-1690 Nm³/m³ (2000-10,000 SCFB), preferably 500-1350 (3000-8000), say 857 Nm³/m³ (5084 SCFB). Temperature of operation is typically 340°C-450°C (650°F-850°F), preferably 370°C-440°C (700°F-825°F), say 437°C (819°F). The operation is essentially isothermal; and the temperature typically may vary throughout the bed by less than about 11°C (20°F). Pressure of operation (i.e. reactor inlet partial pressure of hydrogen) may be 10.4-24.2 MPa, preferably 12.5-17.3 MPa, say 17.3 MPa (1500-3500 psia, preferably 1800-2500 psia, say 2495 psia).

The catalyst support is alumina. Although the alumina may be alpha, beta, theta, or gamma alumina, it is preferred to utilize gamma alumina.

The catalyst which may be employed is characterized by Total Surface Area (TSA), Total Pore Volume (TPV), and Pore Diameter Distribution (Pore Size Distribution PSD). The Total Surface Area is 150-240, preferably 165-210, say 199 m²/g. The Total Pore Volume (TPV) may be 0.70-0.98, preferably 0.75-0.95, say 0.87 cc/g.

The Pore Size Distribution (PSD) is such that the substrate contains primary micropores of diameter less than about 100 x 10⁻¹⁰m in amount less than about 0.15 cc/g. Although it may be desired to decrease the volume of these primary micropores to 0 cc/g, in practice its found that the advantages of this invention may be attained when the volume of the primary micropores is at least 0.04 cc/g, say 0.09 cc/g. The advantages are particularly attained at about 5-10% of TPV. It will be apparent that the figures stated for the % of TPV may vary depending on the actual TPV (in terms of cc/g).

Secondary micropores of diameter in the range of about 100-200 x 10⁻¹⁰m are present in amount as high as possible and preferably at least about 0.40 cc/g (50% of TPV). Although it is desirable to have the volume of secondary micropores as high as possible (up to about 74%) of the TPV, it is found that the advantages of this invention may be attained when the volume of secondary micropores is up to 0.6 cc/g, say about 0.49 cc/g. (i.e. 50-74, say 56.3% of TPV).

Mesopores of diameter ≥200 x 10⁻¹⁰m are present in amount of 0.18-0.34 cc/g (26-35% of TPV), say about 0.29 cc/g (about 33.4% of TPV).

Macropores of diameter ≥1000 10⁻¹⁰m, are present in amount of about 0.1-0.22 cc/g (14-22% of TPV), say about 0.16 cc/g (18.4% of TPV).

It will be apparent that the catalysts of this invention are essentially bimodal: there is one major peak in the secondary micropore region of 100-200 x 10⁻¹⁰m and a second lesser peak in the mesopore region of ≥200 x 10⁻¹⁰m.

The charge alumina which may be employed in practice of this invention may be available commercially from catalyst suppliers or it may be prepared by variety of processes typified by that wherein 85-90 parts of pseudobohmite silica-alumina is mixed with 10-15 parts of recycled fines. Acid is added and the mixture is mulled and then extruded in an Auger type extruder through a die having cylindrical holes sized to yield a calcined substrate of 0.9 + 0.07 mm (0.035 ± 0.003 inch) diameter. Extrudate is air-dried to a final temperature of typically 121-135°C (250-275°F) yielding extrudates with 20-25% of ignited solids. The air-dried extrudate is then calcined in an indirect fired kiln for 0.5-4 hours in an atmosphere of air and steam at typically about 538-621°C (1000°F-1150°F).

It should be noted that the Pore Size Distribution (percent of total) in the finished catalyst may be essentially the same as in the charge alumina from which it is prepared (unless the majority of the pore volume distribution in a given range is near a "break-point" -e.g. 100 or 200 x 10⁻¹⁰m, in which case a small change in the amount of pores of a stated size could modify the reported value of the pore volume falling in a reported range). The Total Surface Area and the Total Pore Volume, of the finished catalyst may be 80%-98%, say 96% of the charge alumina from which it is prepared.

Generally the charge alumina and the finished catalysts of this invention will be characterized by the properties set forth in the following Table wherein the columns are as follows:
1. This column lists the broad characteristics for the catalysts of this invention including Pore Volume in cc/g and as % of TPV; Pore Volume occupied by pores falling in designated ranges - as a v% of Total Pore Volume TPV; Pore Mode; Pore Volume falling within ± 20Å from the dV/dD peak in the less than 250Å region; Pore Volume falling within ± 20Å from the dV/dD peak in the less than 200Å region; and Surface Area in m²/g. 1Å = 1 x 10⁻¹⁰m.
2-3. These columns list specific properties of illustrative catalysts.
4. This column lists specific properties of a comparative catalyst.

Pore Size Distribution (and Pore Mode) is determined by mercury intrusion techniques known in the art.

**TABLE**

| cc/g | 1 | 2 | 3 | 4 |
|---|---|---|---|---|
| TPV | 0.7-0.98 | 0.87 | 0.81 | 0.87 |
| ≥1000Å | 0.1-0.22 | 0.16 | 0.13 | 0.23 |
| >250A | 0.15-0.31 | 0.26 | 0.18 | 0.32 |
| ≥200Å | 0.18-0.34 | 0.29 | 0.22 | 0.37 |
| ≤100Å | 0.15 max | 0.09 | 0.04 | 0.16 |
| 100-200A | 0.40 min | 0.49 | 0.55 | 0.34 |
| % | | | | |
| TPV | 100 | 100 | 100 | 100 |
| ≥1000Å | 14-22 | 18.4 | 16 | 26.4 |
| ≥250Å | 22-32 | 29.9 | 22.2 | 36.8 |
| >200Å | 26-35 | 33.4 | 27.2 | 42.5 |
| ≤100Å | 15 max | 10.3 | 4.9 | 18.4 |
| 100-200Å | 50 min | 56.3 | 67.9 | 39.1 |
| Pore Mode Å dV/dD max from Hg | 100-145 | 116 | 125 | 95 |
| Pore Vol. ± 20Å from dV/dD max, % PV <250Å | 53 min | 57.5 | 59 | 43.6 |
| Pore Vol. ± 20Å from dV/dD max, % PV <200Å | 57 min | 60.5 | 63 | 48 |
| Total Sur. Area m²/g | 155-240 | 199 | 210 | 172 |

The alumina charge extrudates may be loaded with metals to yield a product catalyst containing a Group VIII non-noble oxide in amount of 2.2-6w%, preferably 2.6-3.5w%, say 3.1w% and a Group VI-B metal oxide in amount of 7-24, preferably 10-24w%, say 14.

The Group VIII metal may be a non-noble metal such as iron, cobalt, or nickel. This metal may be loaded onto the alumina typically from a 10%-50%, say 30.0% aqueous solution of a water-soluble salt (e.g. a nitrate, acetate, oxalate etc.). The preferred metal may be nickel, employed as a 30w% aqueous solution of nickel nitrate.

The Group VI-B metal may preferably be chromium; molybdenum, or tungsten. This metal may be loaded onto the alumina typically from a 10%-25%, say 15% aqueous solution of a water-soluble salt such as ammonium molybdate.

It is a feature of the catalysts of the invention that they preferably contain not more than about 2w% of P₂O₅ and preferably less than about 0.2w%. (Phosphorus-containing components are not intentionally added during catalyst preparation). Presence of phosphorus undesirably contributes to sediment formation.

Silica SiO₂ may be incorporated in small amounts typically up to about 2.5w%, although the benefits of the invention may be attained without addition of silica.

The product catalyst may be characterized by the following content of metals:

**TABLE**

| Metals w% | 1 | 2 | 3 | 4 |
|---|---|---|---|---|
| VIII | 2.5-6 | 3.1 | 3.3 | 2.6 |
| VIB | 13-24 | 14 | 15.1 | 9.8 |
| SiO₂ | < 2.5 | 2 | 1.9 | 0.02 |
| P₂O₅ | < 2 | ≤0.2 | < 0.2 | < 0.2 |

These catalyst metals may be loaded onto the alumina support by spraying the latter with a solution of the former. Although it is preferred to load the metals simultaneously, it is possible to load each separately. Small amounts of H₂O₂ may be added to stabilize the impregnating solution. It is preferred that solutions stabilized with H₃PO₄ not be used - in order to avoid incorporating phosphorus into the catalyst. Loading of each metal may be effected by spraying the alumina support with the aqueous solution at 15-37°C (60°F-100°F), say 26°C (80°F) followed by draining, drying at 104-148°C (220°F-300°F), say 121°C (250°F) for 2-10 hours, say 4 hours, and calcining at 482-648°C (900°F-1250°F), say 621°C (1150°F) for 0.5-5 hours, say 0.5 hour.

In practice of the process of this invention, the catalyst, preferably in the form of extruded cylinders of 0.95mm (0.038 inch) diameter and 3.8mm (0.15 inch) length may be placed within a reactor. The hydrocarbon charge is admitted to the lower portion of the bed in liquid phase at 343°-454°C (650°F-850°F), preferably 371°-440°C (700°F-825°F), say 437°C (819°F) and 7-24.2 MPa (1000-3500 psig), preferably 10.4-20.8 MPa (1500-3000 psia), say 17.3 MPa (2495 psia). Hydrogen gas is admitted with the hydrocarbon charge in amount of 2000-10,000 SCFB, preferably 3000-8000 SCFB, say 5084 SCFB. The hydrocarbon charge passes through the bed at a LHSV of 0.08-1.5, preferably 0.1-1.0, say 0.40. During operation, the bed expands to form an ebullated bed with a defined upper level. Operation is essentially isothermal with a typical maximum temperature difference between the inlet and the outlet of 0-27°C (0°F-50°F), preferably 0-17°C (0°F-30°F), say 8°C (15°F).

In a less preferred embodiment, the reaction may be carried out in one or more continuously stirred tank reactors (CSTR) which also provides essentially isothermal conditions.

During passage through the reactor, preferably containing an ebullated bed, the hydrocarbon feedstock may be converted to lower boiling products by the hydrotreating/hydro-cracking reaction. In a typical embodiment, a charge containing 60w%-95%, say 76.1w% boiling above 540°C (1000°F) and 5v%-40v%, say 23.9v% boiling in the 315-540°C (600°F-10000°F) range may be converted to a hydrotreated product containing only 3v%-45v%, say 14v% boiling above 540°C (1000°F). The sulfur ofthe original charge is 3-7w%, typically 5.6w%; the sulfur content of the unconverted 540°C+ (1000°F+) component in the product is 0.5-3.5w%, typically 2.6w%.

It is a particular feature of the catalysts of this invention that they permit operation to be carried out under conditions which yield a substantially decreased content of sediment in the product stream leaving hydrotreating. (Sediment is measured by the Shell Hot Filtration Solids Test of Van Kerknoort et al Jour. Inst. Pet (1951) 596-604). Sediment in the product is undesirable because it deposits on and inside of various pieces of equipment downstream of hydrotreating and interferes with proper functioning of e.g. pumps, heat exchangers, fractionating towers, etc.

Commonly sediment that is formed from hy-drotreating the charge may be as high as 1w%, typically 0.2-0.9w%, say 0.19w%. Prior art processes may reduce this to 0.1-0.4w%. It is a feature of the catalysts of this invention that they permit attainment of hydrotreated product with sediment content typically as low as 0.03-0.07w%, say 0.03w%.

It will be noted that catalysts of this invention are particularly advantageous in that they permit attainment of product hydro-carbon streams containing the lowest content of sediment at highest conversion, while producing product characterized by low nitrogen, low sulfur, and low metals content.

It will be apparent to those skilled in the art that this invention is characterized by advantages including the following:
(i) it permits attainment of yield of hydrocarbon products boiling below 540°C (1000°F);
(ii) it permits operation to yield highly desulfurized hydrocarbon product;
(iii) it permits operation to yield hydrocarbon product characterized by lower content of metals;
(iv) the 340°-540°C (650°F-1000°F) portion of the product is also characterized by a desirably lower content of nitrogen and sulfur;
(v) the 540°C+ (1000°F+) component of the product is characterized by a significantly lower content of sulfur;
(vi) the liquid product is characterized by a low content of sediment (0.03-0.07w%, say 0.03w%). Thus it would be expected to improve unit operability and to prevent unscheduled shutdowns caused by sediment deposition in the down-stream fractionation equipment.
(vii) the liquid product is characterized by a significant reduction of asphaltenes and carbon residue.

Practice of the process of this invention will be apparent to those skilled in the art from the following wherein all parts are parts by weight unless otherwise stated. Control examples are designated by an asterisk.

In the examples, the following charge stocks were employed:

**TABLE**

| Charge Stocks | | | | |
|---|---|---|---|---|
| Property | I | II | III | IV |
| API Gravity | 3.3 | 3.1 | 6.0 | 4.4 |
| Sulfur w% | 5.29 | 5.55 | 3.78 | 5.19 |
| Nitrogen wppm | 4430 | 4328 | 5752 | 4220 |
| Vanadium wppm | 118 | 118 | 122 | 113 |
| Nickel wppm | 34 | 37 | 57 | 36 |
| CCR w% | 19.0 | 20.2 | 22.1 | 19.6 |
| 540°C+ v% | 74.7 | 76.1 | 93.7 | 66.5 |
| Sediment w% | Ni1 | Ni1 | Ni1 | Ni1 |
| Asphaltenes w% | 9.62 | 9.48 | 10.05 | 9.17 |

### EXAMPLE I

In this example which represents the best mode presently known of carrying out the process of this invention, the charge hydrocarbon is the 3.1 API Arabian Medium/Heavy Vacuum Resid of column II having the properties set forth in the table supra. It should be noted that this charge hydro-carbon is particularly characterized by the presence of 76.1v% of components having a boiling point above 540°C (1000°F), by a sulfur content of 5.55w%, by a vanadium content of 118 wppm, a nickel content of 37 wppm, and a nitrogen content of 4328 wppm.

The catalyst is prepared from a commercially available gamma alumina having the properties set forth in the Table which follows which notes the Total Surface Area TSA in square meters per gram of alumina, Total Pore Volume TPV in cubic centimeters per gram, and the Pore Volume PV, as a percent of TPV, arising from pores of noted diameter (A):

**TABLE**

| Property | Finished Catalyst | Charge Alumina |
|---|---|---|
| TSA m²/g | 199 | 208 |
| TPV cc/g | 0.87 | 0.99 |
| PV% ≥ 1000Å | 18.4 | 19.2 |
| PV% ≥ 250Å | 29.9 | 27.3 |
| PV% ≥ 200Å | 33.4 | 29.3 |
| PV% ≤ 100Å | 10.3 | 34.3 |
| PV% ≤ 100-200Å | 56.3 | 36.4 |

This alumina in the form of extrudate of diameter of 0.9-1.0mm (0.035-0.041 inch) is impregnated at 27°C (80°F) with an aqueous solution which contains nickel nitrate hexahydrate and ammonium molybdate and hydrogen peroxide. The catalyst is dried at 121°C (250°F) for 4 hours and calcined at 590°C (1150°F) for 30 minutes.

The product catalyst is characterized as follows:

**TABLE**

| Component | W% |
|---|---|
| MoO₃ | 14.0 |
| NiO | 3.1 |
| SiO₂ | 2.0 |
| SO₄ | Ni1 |
| Na₂O | 0.02 |
| P₂O₅ | ≤ 0.2 |

Charge hydrocarbon is admitted in liquid phase at 17.3 MPa (2495 psia) to the first stage of a two stage ebullated bed at an overall liquid space velocity LHSV of 0.40 and an overall average temperature of 437°C (819°F). Hydrogen is admitted in amount of 5084 SCFB.

Product is collected from the second stage and analyzed to yield the following data:

**TABLE**

| Overall Performance | |
|---|---|
| 540°C+ Conversion v% | 81.1 |
| Desulfurization w% | 81.9 |
| Denitrogenation w% | 43.6 |
| Ni removal w% | 82.9 |
| V removal w% | 97.2 |
| CCR Reduction w% | 66.0 |
| Asphaltenes Reduction w% | 55.0 |

| 540°C+ Product | |
|---|---|
| Asphaltenes w% | 27.6 |
| Gravity API w% | -4.8 |
| Total Nitrogen wppm | 6964 |
| Sulfur w% | 2.6 |
| CCR w% | 44.4 |

| Bottoms Flash Drum Product* | |
|---|---|
| Sediment w% | 0.03 |

| | |
|---|---|
| * Bottoms Flash Drum (BFD) Product is nominally 650°F+ boiling range. | |

From the above, it is apparent that it is possible to hydrotreat to attain high 540°C+ (1000°F+) Conversion (of e. g. 81.1%) with production of extremely low (0.03w%) BFD Sediment. Prior art hydrotreating operations are limited to much lower Conversions (e.g. 60%) in order to permit attainment of product containing minimum Sediment - and even at the decreased level of Conversion, the prior art BFD Sediment may be as high as about 0.2-0.9% i.e. about 7-30 times as great as is observed in the case of the process of this invention.

### EXAMPLE II

In this Example, the charge and catalyst are the same as in Example I. Operating conditions are as follows:

**TABLE**

| | |
|---|---|
| Inlet hydrogen pressure psia | 2377 |
| Temperature °C | 431°C |
| LHSV | 0.41 |
| Hydrogen rate SCFB | 4940 |
| Number of Stages | 2 |

The following results are as follows:

**TABLE**

| Property | |
|---|---|
| Overall Performance | Value |
| 540°C+ Conversion v% | 74.3 |
| Desulfurization w% | 80.2 |
| Denitrogenation w% | 41.9 |
| CRR Reduction w% | 60.6 |
| Asphaltenes Reduction w% | 69.0 |

| 540°C Product | |
|---|---|
| Gravity API | -1.1 |
| Asphaltenes w% | 14.8 |
| Sulfur w% | 2.5 |
| CCR w% | 36.8 |

| BFD Product | |
|---|---|
| Sediment w% | 0.04 |

### EXAMPLE III

In this Example, the catalyst of Example I is employed. The charge hydrocarbon is that of Column I particularly characterized by 74.7v% of components boiling above 540°C (1000°F).

Conditions of operation include inlet hydrogen pressure of 17.6 MPa (2418 psia) at 420°C (787°F) and LHSV of 0.35. Hydrogen is admitted in amount of 5431 SCFB to the two stage reactors.

The results are as follows:

| Property | I Value |
|---|---|
| Overall Performance | |
| 540°C+ Conversion | 60.0 |
| Desulfurization w% | 80.0 |
| Denitrogenation w% | 40.0 |
| CCR Reduction w% | 58.0 |
| BFD Sediment w% | 0.07 |
| Asphaltene | 70.2 |
| Reduction w% | |

From the above it is clear that the results attained in terms of desulfurization, denitrification, and CCR reduction at 60.0v% Conversion of 540°C+ are satisfactory while the attainment of BFD Sediment of only 0.07w% is unexpectedly and significantly lower than the 0.2-0.9 range attained by prior art techniques at the same 60% conversion level.

### EXAMPLES IV*-V*

In Control Examples IV*-V*, typical prior art catalysts are employed having the following preperties:

**TABLE**

| | cc/g | |
|---|---|---|
| Property | Example IV* | Example V* |
| TPV | 0.76 | 0.65 |
| > 4000 Å | 0.06 | 0.00 |
| > 1000 Å | 0.19 | 0.01 |
| > 500 Å | 0.21 | 0.02 |
| > 300 Å | 0.23 | 0.04 |
| > 250 Å | 0.23 | 0.05 |
| > 200 Å | 0.24 | 0.07 |
| > 100 Å | 0.29 | 0.59 |
| < 100 Å | 0.47 | 0.06 |
| < 200 Å | 0.52 | 0.58 |
| 100-200 Å | 0.05 | 0.52 |
| 200-300 Å | 0.01 | 0.03 |
| 300-500 Å | 0.02 | 0.02 |
| 500-1000 Å | 0.02 | 0.01 |
| 1000-4000 Å | 0.13 | 0.01 |
| Metals w% | | |
| NiO | 3.1 | 3.0 |
| MoO₃ | 12.4 | 15 |
| SiO₂ | 0.02 | 2.5 |
| P₂O₅ | ≤ 0.2 | ≤ 0.2 |
| | | |
| Surface Area m²/g | 315 | 194 |

### EXAMPLE IV*

The catalyst of Example IV* is evaluated with the 4.4 API charge hydrocarbon set forth in column IV. Conditions of operation include inlet hydrogen pressure of 17.4 MPa (2375 psia) at 420°C (787°F) and overall LHSV of 0.35. Hydrogen is admitted in amount of 5431 SCFB to the two stage reactors.

The results are as follows:

**TABLE**

| Property | Value |
|---|---|
| 540°C Conversion v% | 60.0 |
| Overall Desulfurization w% | 73.2 |
| Overall Denitrogenation w% | 35.0 |
| Overall CCR Reduction w% | 55.0 |
| Overall Asphaltene | 54.5 |
| Reduction w% | |
| BFD Sediment w% | 0.19 |

From a comparison of Example III and Control Example IV*, it is seen that the catalyst of this invention, Example III, provides improved desulfurization, denitro-genation, and CCR reduction while providing a much lower sediment (0.07w% v 0.19w%) at the 60v% 540°C conversion level, compared to Control Example IV*.

### EXAMPLE V*

In this Control Example V*, the catalyst is evaluated with the same charge hydrocarbon as used in Example III. A two stage operation is carried out at 415°C (780°F), 0.35 LHSV, 16.7MPa (2414 psia) reactor inlet hydrogen partial pressure, and 5658 SCFB hydrogen.

The results are as follows:

**TABLE**

| Property | Value |
|---|---|
| 540°C+ Conversion v% | 60.0 |
| Overall Desulfurization w% | 81.9 |
| Overall Denitrogenation w% | 40.0 |
| Overall CCR Reduction w% | 60.3 |
| Overall Asphaltene Reduction w% | 63.4 |
| BFD Sediment w% | 0.90 |

During the run, a considerable amount of equipment plugging occurred due to the high sediment content (0.90w%) of the product. The unit was shutdown for clean-out after an undesirably short run time. It would have been impossible to attempt to use this catalyst to attain desired higher conversion levels such as those attained in Examples I (81.1 w%) and II (74.3w%). (It is generally observed that BFD sediment increases with an increase in 540°C Conversion).

It is clear the the catalysts of this invention (e.g. Example I showing 0.04w% sediment) provide significantly better sediment control over the Control prior art catalysts (Example IV* 0.19w% or Example V* 0.90w%) by a factor of about 5-25. It is only the catalyst of this invention which minimizes sediment while obtaining superior desulfurization, denitrogenation, and CCR reduction.

### EXAMPLE VI (Comparative)

In this Example, the charge hydrocarbon is the 6.0 API Gravity stock III in the Table supra. The catalyst is that set forth in Column 4 of the Catalyst Table supra of TPV of 0.87 cc/g and Pore Mode of 95Å. Conditions of operation for a single stage evaluation include inlet hydrogen pressure of 15.7 MPa (2270 psia) at 423°C (793°F). Space velocity (LHSV) is 0.289 and hydrogen feed rate is 4707 SCFB.

**TABLE**

| Property | Value |
|---|---|
| 540°C+ Conversion v% | 62.4 |
| Desulfurization w% | 62.0 |
| Denitrogenation w% | 28.0 |
| Vanadium Removal w% | 86.1 |
| Nickel Removal w% | 76.5 |
| CCR Removal w% | 50.9 |
| Asphaltenes Removal w% | 43.8 |
| 540°C+ Product | |
| Gravity API | 2.4 |
| Sulfur w% | 2.79 |
| CCR w% | 29.5 |
| Asphaltenes w% | 15.6 |
| BFD Sediment w% | 0.12 |

### EXAMPLE VII*

In this Control Example, the charge is the same 6.0 API Gravity liquid of Column III of the Table supra.

The catalyst is the typical prior art hydro- treating catalyst employed in Example IV*.

Operating conditions for the single stage evaluation are 423°C (793°F), 16.2 MPa (2341 psia) inlet hydrogen partial pressure, 0.271 LHSV, and 5310 SCFB hydrogen.

The following results are obtained:

**TABLE**

| Property | Value |
|---|---|
| 540°C+ Conversion v% | 63.2 |
| Desulfurization w% | 70.4 |
| Denitrogenation w% | 26.0 |
| Asphaltene Reduction w% | 44.3 |
| Vanadium Removal w% | 78.1 |
| Nickel Removal w% | 64.2 |
| CCR Reduction w% | 49.6 |

| 540°C+ Product | |
|---|---|
| Gravity API | 1.7 |
| Sulfur w% | 2.53 |
| CCR w% | 31.0 |
| Asphaltenes w% | 15.7 |
| BFD Sediment w% | 0.26 |

## Claims

1. A method for catalytically hydroconverting a charge hydrocarbon feed containing components boiling above 540°C (1000°F) together with sediment-formers, sulfur, metals, asphaltenes, carbon residue, and nitrogen which comprises:
contacting said charge hydrocarbon feed in an ebullated bed with hydrogen at isothermal hydrotreating conditions in the presence of, as catalyst, a porous alumina support bearing 2.2-6 w% of a non-Noble Group VIII metal oxide, 7-24 w% of a Group VI-B metal oxide, and 0-2 w% of a phosphorus oxide, said catalyst having a Total Surface Area of 150-240 m²/g, a Total Pore Volume of 0.7-0.98 cc/g, and a Pore Diameter Distribution whereby less than 15% of the Total Pore Volume is present as primary micropores of diameter less than 100Å, at least 50% of the Total Pore Volume is present as secondary micropores of diameter 100-200Å, 26-35% of the Total Pore Volume is present as mesopores of diameter ≥200Å, and 14-22% of the Total Pore Volume is present as macropores of diameter ≥1000Å, thereby forming hydrotreated product containing decreased contents of components boiling above 540°C (1000°F) sediment, sulfur, metals, carbon residue, asphaltenes and nitrogen; and thereafter
recovering said hydrotreated product.

2. A process for hydrotreating a charge hydrocarbon feed as claimed in claim 1 wherein the Pore Volume of pores of diameter less than 100Å is less than 0.15 cc/g.

3. A catalyst comprising a porous alumina support bearing 2.2-6 w% of a non-Noble Group VIII metal oxide, 7-24 w% of a Group VI-B metal oxide, and 0-2 w% of a phosphorus oxide, said catalyst having a Total Surface Area of 150-240 m²/g, a Total Pore Volume of 0.7-0.98 cc/g, and a Pore Diameter Distribution whereby less than 15% of the Total Pore Volume is present as primary micropores of diameter less than 100Å, at least 50% of the Total Pore Volume is present as secondary micropores of diameter 100Å-200Å, 26-35% of the Total Pore Volume is present as mesopores of diameter ≥200Å, and 14-22% of the Total Pore Volume is present as macropores of diameter ≥1000Å.

## Patentansprüche

1. Verfahren zur katalytischen Hydroumwandlung eines Chargenkohlenwasserstoffeinsatzmaterials, das Komponenten, die oberhalb 540°C (1000°F) sieden, zusammen mit Sedimentbildnern, Schwefel, Metallen, Asphaltenen, Kohlenstoffrückstand und Stickstoff enthält, welches umfaßt:
daß besagtes Chargenkohlenwasserstoffeinsatzmaterial in einem aufwallenden Bett mit Wasserstoff bei isothermen Hydrobehandlungsbedingungen in Gegenwart eines porösen Aluminiumoxidträgers, der 2,2 - 6 Gew.-% eines Gruppe-VIII-Unedelmetalloxids, 7 - 24 Gew.-% eines Gruppe-VI-B-Metalloxids und 0 - 2 Gew.-% eines Phosphoroxids trägt, als Katalysator, in Kontakt gebracht wird, wobei besagter Katalysator eine Gesamtoberfläche von 150 - 240 m²/g, ein Gesamtporenvolumen von 0,7 - 0,98 cc/g und eine Porendurchmesserverteilung aufweist, durch die weniger als 15% des Gesamtporenvolumens als primäre Mikroporen mit einem Durchmesser von weniger als 100Å vorliegen, wenigstens 50% des Gesamtporenvolumens als sekundäre Mikroporen mit einem Durchmesser von 100 - 200Å vorliegen, 26 - 35% des Gesamtporenvolumens als Mesoporen mit einem Durchmesser ≥200Å vorliegen und 14 - 22% des Gesamtporenvolumlens als Makroporen mit einem Durchmesser von ≥1000Å vorliegen, wodurch hydrobehandeltes Produkt gebildet wird, das verringerte Gehalte an Komponenten, die oberhalb 540°C (1000°F) sieden, Sediment, Schwefel, Metallen, Kohlenstoffrückstand, Asphaltenen und Stickstoff enthält; und daß anschließend besagtes hydrobehandeltes Produkt rückgewonnen wird.

2. Verfahren zur Hydrobehandlung eines Chargenkohlenwasserstoffeinsatzmaterials nach Anspruch 1, **dadurch gekennzeichnet, daß** das Porenvolumen von Poren mit einem Durchmesser von weniger als 100Å geringer ist als 0,15 cc/g.

3. Katalysator, der einen porösen Aluminiumoxidträger umfaßt, der 2,2 - 6 Gew.-% eines Gruppe-VIII-Unedelmetalloxids, 7 - 24 Gew.-% eines Gruppe-VI-B-Metalloxids und 0 - 2 Gew.-% eines Phorsphoroxids trägt, wobei besagter Katalysator eine Gesamtoberfläche von 150 - 240 m²/g, ein Gesamtporenvolumen von 0,7 - 0,98 cc/g und eine Porendurchmesserverteilung aufweist, durch die weniger als 15% des Gesamtporenvolumens als primäre Mikroporen mit einem Durchmesser von weniger als 100Å vorliegen, wenigstens 50% des Gesamtporenvolumens als sekundäre Mikroporen mit einem Durchmesser von 100 - 200Å vorliegen, 26 - 35% des Gesamtporenvolumens als Mesoporen mit einem Durchmesser ≥200Å vorliegen und 14 - 22% des Gesamtporenvolumens als Makroporen mit einem Durchmesser ≥1000Å vorliegen.

## Revendications

1. Procédé pour l'hydroconversion catalytique d'une charge d'alimentation hydrocarbonée contenant des constituants bouillant au-dessus de 540°C (1000°F) avec des agents formant des sédiments, du soufre, des métaux, des asphaltènes, un résidu carboné et de l'azote, qui comprend
la mise en contact de ladite charge d'alimentation hydrocarbonée dans un lit bouillonnant avec de l'hydrogène à des conditions d'hydrotraitement isothermique en présence, en tant que catalyseur, d'un support d'alumine poreuse portant 2,2 à 6% en poids d'un oxyde de métal non noble du groupe VIII, 7 à 24% en poids d'un oxyde de métal du groupe VI-B et 0 à 2% en poids d'un oxyde de phosphore, ledit catalyseur ayant une surface spécifique totale de 150 à 240 m²/g, un volume total des pores de 0,7 à 0,98 cm³/g et une distribution du diamètre des pores telle que moins de 15% du volume total des pores sont présents sous la forme de micropores primaires d'un diamètre inférieur à 100 Å, au moins 50% du volume total des pores sont présents sous la forme de micropores secondaires d'un diamètre de 100 Å à 200 Å, 26 à 35% du volume total des pores sont présents sous la forme de mésopores d'un diamètre ≥ 200 Å, et 14 à 22% du volume total des pores sont présents sous la forme de macropores d'un diamètre ≥ 1000 Å, de façon à former un produit hydrotraité contenant des teneurs réduites en constituants bouillant au-dessus de 540°C (1000°F), en sédiments, soufre, métaux, résidu carboné, asphaltènes et azote ; puis
la récupération dudit produit hydrotraité.

2. Procédé pour hydrotraiter une charge d'alimentation hydrocarbonée selon la revendication 1, dans lequel le volume de pore des pores d'un diamètre inférieur à 100 Å est inférieur à 0,15 cm³/g.

3. Catalyseur comprenant un support d'alumine poreuse portant 2,2 à 6% en poids d'un oxyde de métal non noble du groupe VIII, 7 à 24% en poids d'un oxyde de métal du groupe VI-B et 0 à 2% en poids d'un oxyde de phosphore, ledit catalyseur ayant une surface spécifique totale de 150 à 240 m²/g, un volume total des pores de 0,7 à 0,98 cm³/g et une distribution du diamètre des pores telle que moins de 15% du volume total des pores sont présents sous la forme de micropores primaires d'un diamètre inférieur à 100 Å, au moins 50% du volume total des pores sont présents sous la forme de micropores secondaires d'un diamètre de 100 Å à 200 Å, 26 à 35% du volume total des pores sont présents sous la forme de mésopores d'un diamètre ≥ 200 Å, et 14 à 22% du volume total des pores sont présents sous la forme de macropores d'un diamètre ≥ 1000 Å.
